# NEW EUROPEAN PATENT SPECIFICATION

(11) **EP 3 275 307 B2**
(45) Date of publication and mention of the opposition decision: **28.08.2024**
(45) Mention of the grant of the patent: 09.12.2020
(21) Application number: 17175056.5
(22) Date of filing: 08.06.2017
(51) Int. Cl.: A01G 24/00

(54) **USE OF A MINERAL FIBER SUBSTRATE FOR PLANT GROWTH**
VERWENDUNG EINES MINERALFASERSUBSTRATS FÜR DAS WACHSTUM VON PFLANZEN
UTILISATION D'UN SUBSTRAT EN FIBRE MINÉRALE POUR LA CROISSANCE DES PLANTES

(30) Priority: 29.07.2016 RU 2016131385
(43) Date of publication of application: 31.01.2018
(73) Proprietor: Joint Stock Company "TechnoNICOL", Moscow 129110 (RU)
(72) Inventor: Assorova, Polina Viktorovna, Ryazan 390000 (RU); Ivanov, Sergey Petrovich, Moscow 109428 (RU); Zaporozhets, Tatiana Evgenievna, Volgograd 400022 (RU); Krasenkov, Dmitry Vladimirovich, Ryazan 390000 (RU)
(74) Representative: Jeck, Jonathan

(56) References cited:
- EP-A1- 1 880 598
- WO-A1-2012/162845
- WO-A1-2014/135681
- WO-A1-2015/044526

## Description

### Field of the invention

This invention relates to the use of a substrate for growing plants made of mineral wool mutually connected via a binder that does not contain formaldehyde and phenol.

### Background of the invention

Mineral and rock wool is a fibrous material obtained from the melts of gabbro-basalt rocks as well as smelter slags and mixtures thereof.

Mineral wool is known as a highly efficient heat and sound insulating material. The melting point (temperature) of the fibers exceeds 1000°C, which allows using mineral wool products in a wide range of operating temperatures.

Mineral wool has unique properties, including a fire resistance, a biological and chemical resistance to various aggressive substances, a fungus resistance and a rodent resistance. At the same time, mineral wool complies with the current sanitary and hygienic standards and quality standards. In addition, mineral wool exhibits a volume and shape stability in any conditions; it has a low thermal conductivity, a high thermal resistance and a high strength (the more vertical fibers are in the material, the higher is its strength).

High-quality mineral wool is a chemically inactive medium and does not cause a corrosion of metals in contact with it.

Any mineral wool is easy to cut for shaping: soft mineral wool can be cut with a knife, and a denser one - with a hacksaw. Mineral wool can be easily placed on any surface with any configuration, as it can be easily reshaped.

Furthermore, mineral wool is durable -the lifetime of mineral wool is at least 70 years, in case of proper use. Such durability is achieved by using basaltic rocks.

A great number of the material benefits make it one of the most popular heat and sound insulators.

The first use of rock wool as a hydroponic substrate has been proposed in Denmark in 1969. For example, UK Patent No. 1336426 (published on 07.11.1973) discloses a mineral wool substrate that can be used in agriculture for growing plants.

Such use is possible since mineral wool substrates hold their shape well due to the stiffness of the matrix made of mineral fibers and have a high porosity, which enables to retain moisture in a controlled and predictable manner. Therefore, by the mid-1990s, many greenhouse farms worldwide had almost switched over to cultivating garden and garden crops with a small-volume hydroponic method using a mineral wool base.

EP 1 880 598 A1 discloses methods of growing plants using a mineral wool growth substrate, wherein the mineral wool growth substrate comprises a binder, in particular an organic hydrophobic binder, namely a phenol formaldehyde resin or urea formaldehyde resin, in particular phenol urea formaldehyde resin.

The main problem of using mineral wool as a binder was first considered its hydrophobicity, due to which it poorly absorbed and retained water necessary for plant growth. This problem was remedied, in particular, by the addition of wetting agents. However, wetting agents can be washed off during prolonged use for growing plants and the hydrophobicity of the substrate increases.

Another serious problem of using mineral wool as a hydroponic material is its possible toxicity due to phenol-formaldehyde resins used in the binders. The use of these binders for heat and sound insulators is reasonable since their components are affordable, have a low viscosity in the uncured state and are capable of curing to form a rigid thermosetting polymer; therefore, it is possible to obtain a final product with good physical and mechanical properties.

However, the use of phenol-formaldehyde binders is becoming increasingly undesirable due to using environmental contaminants and phytotoxic materials - formaldehyde and phenol - which release during the manufacture and implementation. This is especially important if mineral wool is used as a substrate for growing plants.

In addition, due to phenol-formaldehyde binders, the waste substrate must be removed for disposal to special landfills.

Therefore, the replacement of phenol-formaldehyde resin with environmentally friendly binders is under development all over the world.

The use of mineral wool with phenol-formaldehyde binders as a growing substrate also involves a problem related to the buffer reaction: filling the substrate with water sometimes causes an increase in pH towards alkaline, around 7.5-9, which affects adversely the development of plants.

Thus, there is a necessity for obtaining a material for a hydroponic substrate, which does not contain phenol-formaldehyde binders, but provides sufficient hygroscopicity required for plant growth and a suitable medium in terms of acidity.

Many formaldehyde-free compositions used as binders in the production of mineral wool products (so-called non-phenol-formaldehyde binders) have been developed.

WO 2015 / 044 526 A1 discloses growing medium structures for cultivation of plants based on Sphagnum moss and further comprising at least one foaming agent selected from e.g. polyvinyl alcohol and starch-based binders.

For example, there is a binder made of a water-soluble resin, produced from cyclic anhydride and alkanolamine (Patent RU 2209203, published on 27.07.2003). In addition, Patent RU2291883, published on 20.01.2007, discloses a binder for a mineral wool product obtained by reacting a carboxylic acid with an alkanolamine.

Patent RU2102350 (published on 20.01.1998) provides a heat-insulating material obtained from basaltic fibers (0.2-3.0 µm in diameter), a clay binder, polyvinyl acetate dispersion and a hydrophobizated polyethylhydrosiloxane liquid. Such material can be used for thermal insulation of surfaces, but this composition cannot be used as a growing substrate due to its hydrophobic properties.

The prior art also provides a method for manufacturing fibrous heat-insulating products, which includes preparation of a suspension of inorganic fibers, preferably basaltic fibers, and a clay binder (Patent RU2111115, published on 20.05.1998). The disadvantage of this method is a poor water resistance of the product.

The composition of a binder for a fibrous nonwoven material has been also known - see Patent RU2430124 (published on 27.09.2011), as well as a method for impregnating a loose mass of fibers with a binder solution. The preparation of a curable aqueous composition of a binder for a nonwoven material is disclosed by combining the following components:
(a) a polymer containing hydroxyl groups, which is a combination of polyvinyl alcohol and a component selected from starch, modified starch and sugar;
(b) a multifunctional cross-linking agent selected from a non-polymeric polyacid, its salts, anhydride and non-polymeric polyaldehyde, wherein if the multifunctional cross-linking agent is a non-polymeric polyaldehyde, the composition further comprises (c) a catalyst.

However, this binder is intended for non-woven fabric, has insufficient water resistance and strength when the substrate is filled with a nutrient solution. Therefore, it is not applicable for the hydroponic substrate.

Moreover, the composition of a binder for mineral wool has been known (patent RU2491301, published on 27.08.2013), which contains polyvinyl alcohol and one or more cross-linking agents for the hydroxyl polymer. Cross-linking agents are selected from sodium trimetaphosphate, sodium trimetaphosphate/ sodium tripolyphosphate and phosphorus oxychloride, polyamide/ epichlorohydrin cross-linking agents, cyclic amide condensates, and combinations thereof. The disadvantage of this product is the presence of the cross-linking agents in the substrate, which may turn out as a manufacturing problem as well as the presence of residual amounts of these substances in the final product.

The publication of application RU 2007141064 (A) (20.06.2009) provides a curable organo-inorganic water-based binder composition for fibrous products, which is produced by a method comprising simultaneous partial hydrolysis of organooxysilane with water, condensation of hydrolysed organooxysilane and condensation of the condensed silanol with high molecular alcohol in the presence of a catalytic amount of an acid or a base, and also de-acidification of the composition to pH of 4-9.

EA Patent No. 007495 (27.10.2006) discloses a formaldehyde-free aqueous binder composition for mineral fibers, which comprises a binder component (A) prepared by reacting alkanolamine with carboxylic acid anhydride, the product of this reaction being optionally treated with a base, and a binder component (B), which includes at least one carbohydrate.

US Patent No. 6,221,973 (B1) (24.04.2001) discloses a formaldehyde-free curable aqueous composition for fiberglass, containing a polyacid, a polyol and a phosphorous-containing accelerator.

US Patent No. 6,331,350 (B1) (18.12.2001) discloses fiberglass binder which contains a polycarboxy polymer being in this case one of the possible cross-linking agents, and high-molecular alcohol with pH not exceeding 3.5.

US Patent application No. 2008/0108741 (A1) (08.05.2008) discloses a formaldehyde-free curable aqueous composition comprising an adduct of a carbohydrate polymer (a starch) and a multi-functional crosslinking agent such as a polybasic acid. The composition may be used as a binder for fiberglass insulation

Moreover, a composition of a binder for mineral fibers comprising a water soluble component prepared from alkanolamine, carboxylic acid anhydride and polyalkylene glycol is known (US application No. 2010/0292354, published on 18.11.2010).

International Publication WO 2007/129202 (A1) of 15.11.2007 discloses a formaldehyde-free curable aqueous binder for a hydrophilic plant growth substrate. The binder is obtained from a hydroxy-containing polymer (polyvinyl alcohol), a multi-functional crosslinking agent (polyacid, salts thereof and an anhydride), and a hydrophilic modifier (low molecular polyatomic alcohol).

International publication WO 01/82683 of 08.11.2001 discloses a plant growth substrate comprising fibres impregnated with a wetting agent being surfactant polyester of a nonionic fatty acid and a polyglycol.

European application EP 1 889 859 (A1) (20.02.2008) discloses a hydrophilic binder system for porous substrates obtained by reacting polycarboxylic acid (its anhydride) and polyhydroxy component (polyalkylene glycol) to form an ester that further reacts with a phenolic resin.

US application No. 2009/0011214 (A1) (08.01.2009) discloses a polymer composition suitable as a binder for cellulosic fibers, which is a product of a reaction of high molecular alcohol and a cross-linking agent.

The disadvantages of the aforementioned compositions are the following: the binder is produced with a number of chemical reactions, which results in a more complicated and expensive process, and does not eliminate the presence of residual quantities of reagents in the resultant product. In this case, the use of an additional cross-linking agent for the binder can be an adverse factor in terms of the facilitating the manufacturing process and in the terms of phytotoxic and environmentally unfriendly chemical constituents in the product.

In this case, the applicability of most of these and other known compositions of mineral wool for manufacturing a growth substrate has not been studied or examined, and none of them has been implemented in practice in industrial production.

Thus, despite a large number of known solutions related to formaldehyde-free binders, there is a constant need to develop new curable aqueous compositions suitable as a binder for mineral fiber plant growth substrates having the required properties.

Patent RU2446119 (27.03.2012) can be chosen as the closest analogue (prototype), which discloses a bound porous growing substrate made on the basis of mineral fibers in contact with an aqueous binder composition. The water-soluble binder component is prepared with a reaction of an alkanolamine, a carboxylic acid anhydride and a polyalkylene glycol component, with possible treatment of the reaction product with a base.

The disadvantage of this solution is the necessity to use a large number of chemical reagents (alkanolamine, carboxylic acid anhydride and polyalkylene glycol) and a sufficiently long duration of the binder preparation process (up to 16 hours). In addition, the implementation of such a solution does not ensure that there would be absolutely no residual chemical in the growing substrate, and that such chemicals would not be formed during plant growth (for example, through gradual hydrolysis of the cured binder in natural conditions).

### Summary of the invention

The technical effect of this invention consists in increasing the environmental friendliness of the mineral-wool-based plant growth substrate through decrease in its phytotoxicity, and in increasing its hydrophilicity, due to which the substrate has an improved wettability and the required water absorbing and binding ability. In addition, this facilitates the manufacturing process of the substrate through decrease in the number of components and reaction steps.

This effect is achieved by using a substrate containing mineral fibers with a diameter of 0.5 to 10.0 µm, typically 3-5 µm, mutually connected by a binder obtained by thermal curing of an aqueous composition comprising polyvinyl alcohol, modified starch and a silane as an adhesion modifier. A wetting agent can be used (for example, PEG-600 polyethylene glycol) in an amount of 0.10% to 1.00% by dry weight, and curing catalysts may be present in a form of nano- or microparticles in an amount of 0.01% to 1.00 by dry weight of the total composition.

Mineral fibers can be selected from basaltic, glass and slag fibers.

The density of the substrate can be 45 to 95 kg/m³.

In the production of the material, the components are selected in such a proportion that the finished material contains: mineral fibers from 96.8 wt% to 99.25 wt%; the binder from 0.75 wt% to 3.2 wt.%, including polyvinyl alcohol (0.59 wt% to 2.5 wt.%), modified starch (0.15 wt% to 1.5 wt.%), silane (0.01 wt% to 0.20 wt.%).

The binder is preferably present in an amount from 2.0% to 3.0% by dry weight of the total composition.

In a preferred embodiment of the invention, nano- or microparticles additionally added to the binder consist of a material selected from graphite, fullerenes, carbon nanotubes, clays, particles of metals and their alloys, carbides, salts and oxides, micro particles (microspheres) of silicon dioxide, or any combinations thereof.

The use of the above mentioned nano- or microparticles makes it possible to create a denser network of cross-links, which is resulted from reacting various reactive functional groups of the binder with active reaction centers on the surface of nano- or microparticles. As a result, a deep and uniform curing of all the components of the binder is ensured and, as a result, a more durable and waterproof substrate is produced. Furthermore, due to the addition of nano- and microparticles, the moisture-retaining capacity of the material is increased, apparently due to a developed microrelief is created on the surface of mineral fibers, which is formed by nano- and microparticles chemically attached to the surface.

### Detailed description of the preferred embodiments

The mineral wool material and products thereof are produced by applying a binder composition, which is free from phenol/formaldehyde, to mineral fibers formed from the melt. The fibers coated with the binder are further molded into a shape convenient for subsequent machining and thermally cured to produce a cross-linked three-dimensional polymer mesh that forms a film of a non-melting and non-dissolving coating on the surface of mineral wool fibers bound with it.

The final product preferably contains up to 3.2 wt% of cured polymer, more preferably from 2.0 to 3.0 wt.% of cured polymer, wherein the weight content is calculated based on the amount of the fibers and the cured polymer.

The curable aqueous binder composition for the mineral fiber material and products thereof is a combination of polyvinyl alcohol, polyethylene glycol and modified starch. The composition further includes processing additives typical for the preparation of mineral wool such as silanes used as additional adhesion modifiers of the binder to the surface of mineral fibers.

In some embodiments of this invention, a wetting agent (polyethylene glycol) and/or polymeric curing catalysts in a form of nano- or microparticles are added to the binder formulation. Nano- or microparticles can be graphite, fullerenes, carbon nanotubes, clays, particles of metals and alloys thereof, salts, carbides and oxides, microparticles (microspheres) of silicon dioxide or any combination thereof.

Below are exemplary embodiments that may be used in the present invention. While being not the only possible embodiments, they clearly show the achievability of a given technical effect in various embodiments of the invention.

### EXAMPLES

Component A is prepared by dissolving 30 kg of starch or modified starch in 70 L of demineralized water.

Component B is prepared by dissolving 30 kg of polyvinyl alcohol in 70 L of demineralized water.

### Example 1

The components (calculated per ton of the final mineral wool product (FP)) listed in Table 1 are mixed in the following order:
- Component A - 47 kg,
- Component B - 47 kg,
- Water - 331 L,
- Silquest A 1524 silane - 0.63 kg.

The obtained components are continuously fed to the centrifuge simultaneously with the supply of the melt. In this process the composition is applied to fibers. A primary mat is formed from the fibers connected with the binder, followed by drying and curing in a polymerization chamber at a temperature of 200-280°C and with hot air circulating through the mineral wool mat. Then the mat is cooled by blowing cold air and cut into final products.

The amount of the components is specified as calculated per ton of final product (FP) adjusted for losses of mineral fibers in fiber-forming at a rate of 17%; the amount of the binder fed to a centrifuge is increased by 18%.

**Table 1.**

| | Formulation of the binder: amount, kg per ton of FP | Content of the main substance in the component, % | % of the feed by dry residue per 1 ton of FP, adjusted for losses of 18% | % of the component in 1 ton of FP |
|---|---|---|---|---|
| Component A | 47 | 30 | 1.42 | 1.2 |
| Component B | 47 | 30 | 1.42 | 1.2 |
| Water | 331 | - | 97.097 | - |
| Silquest A 1524 silane | 0.63 | 100 | 0.063 | 0.053 |
| Total | 425.63 | - | 100 | 2.453 |

### Example 2

This process differs from Example 1 by a decreased loading of the binder components listed in Table 2, taken for mixing, namely:
- Component A - 6.0 kg,
- Component B - 23.3 kg,
- water - 395.7 L,
- Silquest A 1524 silane - 0.12 kg.

**Table 2.**

| | Formulation of the binder: amount, kg per ton of FP | Content of the main substance in the component, % | % of the feed by dry residue per 1 ton of FP, adjusted for losses of 18% | % of the dry residue of the component in 1 ton of FP |
|---|---|---|---|---|
| Component A | 6.0 | 30 | 0.18 | 0.15 |
| Component B | 23.3 | 30 | 0.70 | 0.59 |
| Water | 395.7 | - | 99.108 | - |
| Silquest A 1524 silane | 0.12 | 100 | 0.012 | 0.01 |
| Total | 425.12 | - | 100 | 0.75 |

### Example 3

This process differs from Example 1 by an increased loading of the binder components listed in Table 3, taken for mixing, namely:
- Component A - 19.6 kg,
- Component B - 98.3 kg,
- water - 307.1 L,
- Silquest A 1524 silane - 2.36 kg.

**Table 3.**

| | Formulation of the binder: amount, kg per ton of FP | Content of the main substance in the component, % | % of the feed by dry residue per 1 ton of FP, adjusted for losses of 18% | % of the dry residue of the component in 1 ton of FP |
|---|---|---|---|---|
| Component A | 19.6 | 30 | 0.59 | 0.5 |
| Component B | 98.3 | 30 | 2.95 | 2.5 |
| Water | 307.1 | - | 96.224 | - |
| Silquest A 1524 silane | 2.36 | 100 | 0.236 | 0.2 |
| Total | 427.26 | - | 100 | 3.2 |

### Example 4

This process differs from Example 1 in that it further contains a wetting agent, namely polyethylene glycol with a molecular mass of 200 or higher (preferably PEG-600 polyethylene glycol). The wetting agent is pre-mixed with component B, and then all other components listed in Table 4 are mixed.

**Table 4.**

| | Formulation of the binder: amount, kg per ton of FP | Content of the main substance in the component, % | % of the feed by dry residue per 1 ton of FP, adjusted for losses of 18% | % of the dry residue of the component in 1 ton of FP |
|---|---|---|---|---|
| Component A | 47 | 30 | 1.42 | 1.2 |
| Component B | 47 | 30 | 1.42 | 1.2 |
| Water | 331 | - | 96.797 | - |
| Silquest A 1524 silane | 0.63 | 100 | 0.063 | 0.053 |
| PEG-600 wetting agent | 3.0 | 100 | 0.3 | 0.25 |
| Total | 425.93 | - | 100 | 2.703 |

### Example 5

This composition is suitable for seedling, rooting and planting corks.

This process differs from Example 1 in that it contains microparticles, namely MS-N hollow glass microspheres, GPT-S graphite dust, PBMA bentonite powder or A-300 aerosil. Microparticles are pre-mixed with component B, and then all other components listed in Table 5 are mixed:

**Table 5.**

| | Formulation of the binder: amount, kg per ton of FP | Content of the main substance in the component, % | % of the feed by dry residue per 1 ton of FP, adjusted for losses of 18% | % of the dry residue of the component in 1 ton of FP |
|---|---|---|---|---|
| Component A | 47 | 30 | 1.42 | 1.2 |
| Component B | 47 | 30 | 1.42 | 1.2 |
| Water | 331 | - | 96.507 | - |
| SilquestA 1524 silane | 0.63 | 100 | 0.063 | 0.053 |
| Microparticles, in total | 5.9 | 100 | 0.59 | 0.5 |
| Total | 431.53 | - | 100% | 2.953 |

### Example 6

It differs from Example 1 in that it contains nano particles, such as C60 Alfa Aesar fullerene powder or fullerene-containing soot, UMNT carbon nanotubes, aluminum nanopowder coated with L-Alex, multicomponent Cu-Al or Ni-Al nanoparticles, iron oxide nanopowder, zirconium nanopowder, titanium carbide nanopowder, Nanosilica silicon dioxide nanopowder. Nanoparticles are pre-mixed with Component B, and then all other components listed in Table 6 are mixed.

**Table 6.**

| | Formulation of the binder: amount, kg per 1000 kg of finished products | Content of the main substance in the component, % | % of the feed by dry residue per 1 ton of FP, adjusted for losses of 18% | % of the component in 1 ton of finished products |
|---|---|---|---|---|
| Component A | 47 | 30 | 1.42 | 1.2 |
| Component B | 47 | 30 | 1.42 | 1.2 |
| Water | 331 | - | 97.07 | - |
| Silquest A 1524 silane | 0.63 | 100 | 0.063 | 0.053 |
| Nano particles, in total | 0.27 | 100 | 0.027 | 0.022 |
| Total | 425.9 | - | 100% | 2.475 |

The obtained products - mineral wool slabs for manufacture of mats or cubes for growing plants - have the properties listed in Tables 7 and 8.

**Table 7.**

| Description of the characteristics | Example 1 | Example 2 | Example 3 |
|---|---|---|---|
| Density, kg/m³ | 80 | 60 | 50 |
| Compressive strength at 10% deformation, kPa | 10 | 3 | 6 |
| Organic matter content, weight %, no more than | 2.453 | 0.75 | 3.2 |
| Water absorption at full immersion, volume %, no less than 80 | 82 | 88 | 93 |
| Humidity, weight %, no more than | 1 | 1 | 1 |
| Shrinkage at full wetting, %, no more than 10 | 5 | 7 | 6 |

**Table 8.**

| Description of the characteristics | Example 4 (with PEG) | Example 5 (with micro particles) | Example 6 (with nano particles) |
|---|---|---|---|
| Density, kg/m³ | 65 | 80 | 95 |
| Compressive strength at 10% deformation, kPa | 6 | 15* | 17 |
| Organic matter content, weight %, no more than 5 | 2.703 | 2.953 | 2.475 |
| Shrinkage at full wetting, %, no more than 10 | 6 | 5 | 8 |
| Water absorption at full immersion, volume %, no less than 80 | 85 | 88 | 92 |
| Humidity, weight %, no more than | 1 | 1 | 1 |
| * at testing, the mechanical load is directed along the fibers | | | |

These experimental data have shown that in the manufacture of mineral wool slabs with a non-phenol-formaldehyde binder products were produced that are suitable for use as plant growth substrates.

The performed tests of the produced substrate in greenhouse farms have shown that this substrate is suitable for growing plants, has sufficient mechanical strength and durability.

The advantages of the present invention over the use of phenol-formaldehyde resin based substrates are pH stability of the hydroponics solution, absence of phenol or formaldehyde in solutions, possibility of disposing of the waste substrate in the same way as for the coconut or peat substrates.

In terms of physical-mechanical and thermo-technical properties, as well as water absorption, the proposed substrate is as good as conventional phenol-formaldehyde resin based products.

The composition according to Examples 5 and 6 has physical-mechanical properties increased by 20-25% due to deeper curing of the binder in the presence of nanoparticles.

The substrate does not cause buffer reactions or changes in pH of the medium: when filled with distilled water, pH is kept in the range of 4.0-6.5 after 24 hours. This is optimal for the development of the root system of plants, so the substrate provides benefit in the speed and quality of plants development compared to the conventional means manufactured with a phenol-formaldehyde resin based binder.

No release of phenol or formaldehyde occurs at any time of the binder life cycle, so when the plant growth cycle is completed, the substrate can be disposed likewise the coconut and peat substrates are disposed.

The effect of no toxic substance emissions is achieved due to the fact that the binder consists of completely environmentally friendly components: polyvinyl alcohol, modified starch and optionally polyethylene glycol, the mixture of which cures purely thermally (due to the process of the thermal dehydration of polyvinyl alcohol) with no supplementary addition of any specific cross-linking agents. However, a wetting agent - polyethylene glycol and/or additional curing catalysts in the form of nano- or microparticles - can optionally be added to the binder.

Such polymer binder composition being harmless for humans allows to completely solve the problem of possible release of harmful substances from the substrate, since the material is environmentally friendly, nonflammable, sufficiently water resistant and at the same time well moisture-retentive, holds its geometric shape and other consumer performance for a time period sufficient to use the respective products in the plants growth process.

## Claims

1. Use of a substrate for plant growth, the substrate comprises:
mineral fibers having a diameter of 0.5 to 10.0 µm;
a binder obtained by thermal curing of an aqueous composition comprising polyvinyl alcohol, modified starch and a silane as an adhesion modifier.

2. The use of the substrate according to claim 1, comprising by dry weight of the total composition:
from 96.8% to 99.25% of mineral fibers; and
from 0.75% to 3.2% of the binder, including
from 0.59% to 2.5% of polyvinyl alcohol;
from 0.15% to 1.5% of modified starch;
from 0.01% to 0.20% of silane.

3. The use of the substrate according to claim 1, wherein the binder is present in an amount from 2.0% to 3.0% by dry weight of the total composition.

4. The use of the substrate according to claim 1, wherein mineral fibers are selected from basaltic, glass and slag fibers.

5. The use of the substrate according to claim 4, wherein mineral fibers have a diameter of 3-5 µm.

6. The use of the substrate according to claim 1, wherein the substrate has density from 45 to 95 kg/m³.

7. The use of the substrate according to claim 4, further comprising a wetting agent.

8. The use of the substrate according to claim 7, wherein the wetting agent is PEG-600 polyethylene glycol.

9. The use of the substrate according to claim 8, wherein polyethylene glycol is present in an amount from 0.10% to 1.00% by dry weight of the total composition.

10. The use of the substrate according to claims 1 or 7, further comprising curing catalysts in a form of nano- or microparticles.

11. The use of the substrate according to claim 10, wherein the nano- or microparticles are made of a material selected from graphite, fullerenes, carbon nanotubes, clays, particles of metals and their alloys, carbides, salts and oxides, microspheres of silicon dioxide, or any combinations thereof.

12. The use of the substrate according to claim 11, wherein the nano- or microparticles are present in an amount of 0.01% to 1.00% by dry weight of the total composition.

## Patentansprüche

1. Verwendung eines Substrats zum Pflanzenwachstum, das Substrat umfassend:
Mineralfasern mit einem Durchmesser von 0,5 bis 10,0 µm;
ein Bindemittel, welches erhalten ist durch thermisches Aushärten einer wässrigen Zusammensetzung, die Polyvinylalkohol, modifizierte Stärke und ein Silan als Haftungsmodifikator umfasst.

2. Die Verwendung des Substrats nach Anspruch 1, welches nach Trockengewicht der Gesamtzusammensetzung umfasst:
96,8% bis 99,25% Mineralfasern; und
0,75% bis 3,2% des Bindemittels, welches enthält:
0,59% bis 2,5% Polyvinylalkohol;
0,15% bis 1,5% modifizierte Stärke;
0,01% bis 0,20% Silan.

3. Die Verwendung des Substrats nach Anspruch 1, wobei das Bindemittel in einer Menge von 2,0% bis 3,0% nach Trockengewicht der Gesamtzusammensetzung vorhanden ist.

4. Die Verwendung des Substrats nach Anspruch 1, wobei die Mineralfasern aus Basalt-, Glas- und Schlackenfasern ausgewählt sind.

5. Die Verwendung des Substrats nach Anspruch 4, wobei die Mineralfasern einen Durchmesser von 3 bis 5 µm aufweisen.

6. Die Verwendung des Substrats nach Anspruch 1, wobei das Substrat eine Dichte von 45 bis 95 kg/m³ aufweist.

7. Die Verwendung des Substrats nach Anspruch 4, welches zudem ein Netzmittel umfasst.

8. Die Verwendung des Substrats nach Anspruch 7, wobei das Netzmittel PEG-600-Polyethylenglykol ist.

9. Die Verwendung des Substrats nach Anspruch 8, wobei Polyethylenglykol in einer Menge von 0,10% bis 1,00% nach Trockengewicht der Gesamtzusammensetzung vorhanden ist.

10. Die Verwendung des Substrats nach Anspruch 1 oder 7, welches zudem Härtungskatalysatoren in Form von Nano- oder Mikropartikeln umfasst.

11. Die Verwendung des Substrats nach Anspruch 10, wobei die Nano- oder Mikropartikel aus einem Material hergestellt sind, das ausgewählt ist aus Graphit, Fullerenen, Kohlenstoffnanoröhren, Tonen, Partikeln von Metallen und ihren Legierungen, Carbiden, Salzen und Oxiden, Siliciumdioxid-Mikrokugeln oder beliebigen Kombinationen derselben.

12. Die Verwendung des Substrats nach Anspruch 11, wobei die Nano- oder Mikropartikel in einer Menge von 0,01% bis 1,00% nach Trockengewicht der Gesamtzusammensetzung vorhanden sind.

## Revendications

1. Utilisation d'un substrat pour la croissance des plantes, le substrat comprenant:
des fibres minérales ayant un diamètre de 0,5 à 10,0 µm ;
un liant obtenu par polymérisation thermique d'une composition aqueuse comprenant du poly(alcool) de vinyle, de l'amidon modifié et un silane en tant que modificateur d'adhérence.

2. L'utilisation du substrat selon la revendication 1, comprenant en poids sec de la composition totale :
96,8 % à 99,25 % de fibres minérales ; et
0,75 % à 3,2 % du liant, incluant :
0,59 % à 2,5 % de poly(alcool) de vinyle ;
0,15 % à 1,5 % d'amidon modifié ;
0,01% à 0,20 % de silane.

3. L'utilisation du substrat selon la revendication 1, dans lequel le liant est présent en une quantité de 2,0 % à 3,0 % en poids sec de la composition totale.

4. L'utilisation du substrat selon la revendication 1, dans lequel les fibres minérales sont choisies parmi les fibres de basalte, de verre et de laitier.

5. L'utilisation du substrat selon la revendication 4, dans lequel les fibres minérales ont un diamètre de 3 à 5 µm.

6. L'utilisation du substrat selon la revendication 1, dans lequel le substrat a une densité de 45 à 95 kg/m³.

7. L'utilisation du substrat selon la revendication 4, comprenant en outre un agent mouillant.

8. L'utilisation du substrat selon la revendication 7, dans lequel l'agent mouillant est le poly(éthylèneglycol) PEG 600.

9. L'utilisation du substrat selon la revendication 8, dans lequel le poly(éthylèneglycol) est présent en une quantité de 0,10 % à 1,00 % en poids sec de la composition totale.

10. L'utilisation du substrat selon la revendication 1 ou 7, comprenant en outre des catalyseurs de polymérisation sous la forme de nanoparticules ou de microparticules.

11. L'utilisation du substrat selon la revendication 10, dans lequel les nanoparticules ou les microparticules sont constituées d'une matière choisie parmi le graphite, les fullerènes, les nanotubes de carbone, les argiles, les particules de métaux et leurs alliages, les carbures, les sels et oxydes, les microsphères de dioxyde de silicium, ou des combinaisons quelconques de ceux-ci.

12. L'utilisation du substrat selon la revendication 11, dans lequel les nanoparticules ou les microparticules sont présentes en une quantité de 0,01% à 1,00 % en poids sec de la composition totale.
